# EUROPÄISCHE PATENTANMELDUNG

(11) **EP 2 080 609 A1**
(43) Veröffentlichungstag der Anmeldung: **22.07.2009**
(21) Anmeldenummer: 08001002.8
(22) Anmeldetag: 19.01.2008
(51) Int. Cl.: B29C 65/18, B65B 9/04, B65B 51/16, B65B 57/10

(54) **Siegelvorrichtung mit Siegellastkontrolle**

(71) Anmelder: UHLMANN PAC-SYSTEME GmbH & Co. KG, 88471 Laupheim (DE)
(72) Erfinder: Forst, Lutz, 88471 Laupheim (DE); Armbruster, Andreas, 88348 Bad Saulgau (DE); Bieger, Tobias, 89605 Altheim (DE)
(74) Vertreter: Wächter, Jochen

(57) **Zusammenfassung**

Eine Vorrichtung zum Siegeln einer, vorzugsweise befüllte Näpfe (2) aufweisenden Formfolie (1) mit einer Deckfolie (3) weist eine Vorschubwalze (5) und eine Siegelwalze (8) auf. Die Vorschubwalze (5) wird über einen Walzenantriebes (4) angetrieben und weist in ihrer Umfangsfläche Vertiefungen (6) für die Näpfe (2) auf, wobei die Formfolie (1) und die Deckfolie (3) zwischen der Vorschubwalze (5) und der Siegelwalze (8) durchführbar sind, Die Siegelvorrichtung umfasst mindestens eine Messvorrichtung (30, 31, 33, 35) zum Bestimmen einer Positionsänderung der Siegelwalze (8).

## Beschreibung

Die vorliegende Erfindung betrifft eine Siegelvorrichtung mit Siegellastkontrolle zum Siegeln einer, vorzugsweise befüllte Näpfe aufweisende Formfolie mit einer Deckfolie, zum Beispiel an Blistermaschinen. Insbesondere betrifft die vorliegende Erfindung eine Siegelvorrichtung mit einer mittels eines Walzenantriebes antreibbaren, in ihrer Umfangsfläche Vertiefungen für die Näpfe aufweisenden Vorschubwalze und einer darauf ablaufenden Siegelwalze, zwischen denen die Formfolie und die Deckfolie durchführbar sind.

Bei herkömmlichen Siegelvorrichtungen kann das Problem auftreten, dass die zu siegelnden Waren, wie zum Beispiel Tabletten, Kapseln, Dragees oder dergleichen, die sich in den Näpfen befinden sollen und die mit der Formfolie und der Deckfolie zu verschließen sind, nicht wie vorgesehen in den Näpfen liegen, sondern sich daneben auf der Formfolie auf der späteren Siegelfläche befinden. Zum Einen kann dies durch die Zuführung der Waren verursacht sein, durch die die zu siegelnden Waren neben den Formhöfen zu liegen kommen. Zum Anderen können die Waren während des Transportes der Formfolie durch Erschütterungen oder Bewegungen der Formfolie aus den Näpfen geraten. Weiterhin können durch statische Aufladungen oder menschliche Eingriffe die Waren sich aufstellen oder aus den Näpfen geraten.

Normalerweise werden diese falsch platzierten Waren durch Schrägbürsten oder durch Sicherheitsklappen erfasst und entfernt. Dennoch kann der Fall eintreten, dass sich die Waren auch noch nach dem Passieren dieser Sicherheitsvorkehrungen in dem Bereich der Siegelfläche auf der Formfolie befinden. Durch einen falschen Vorschubschritt passt das ausgeformte gefüllte Folienband nicht in die Vorschubwalze und gelangt in den Spalt zwischen Siegelwalze und Vorschubwalze. Dies führt zu dem Problem, dass zum Beispiel Tabletten, die dadurch zwischen der Vorschubwalze und der Siegelwalze zerdrückt werden, unbemerkt zur weiteren Bearbeitung gelangen, wodurch Verunreinigungen der Endprodukte durch die Tablettenreste auftreten können.

Weiterhin tritt das Problem auf, dass die Waren, die zwischen Siegelwalze und Vorschubwalze gelangen, die Siegelwalze dem Siegeldruck des Zylinders entgegen wegdrücken und auslenken können, so dass auch die anderen Waren, die sich in den Näpfen befinden, nicht gesiegelt werden können, so das fehlerhafte Blisterpackungen unerkannt zur weiteren Bearbeitung gelangen.

Somit liegt der Erfindung die Aufgabe zugrunde, eine Siegelvorrichtung bereit zu stellen, die sicherstellt, dass bei der weiteren Bearbeitung nach dem Siegelschritt die Blisterpackungen einwandfrei und frei von Verunreinigungen sind.

Bei einer Siegelvorrichtung der eingangs genannten Art wird diese Aufgabe dadurch gelöst, dass mindestens eine Messvorrichtung zum Bestimmen einer Positionsänderung der Siegelwalze während des Siegelvorganges vorgesehen ist. Auf diese Weise kann während des Siegelns überprüft werden, ob sich Waren auf der Siegelfläche befinden und diesen Bearbeitungsschritt durch Auslenkung der Siegelwalze und / oder durch Verunreinigungen stören.

Ein weiterer Vorteil liegt darin, dass Beschädigungen an der Siegelwalze und / oder an der Vorschubwalze und Unwuchten erkannt werden können.

Ein zusätzlicher Vorteil liegt darin, dass ungesiegelte oder fehlerhaft gesiegelte Blister erkannt werden können. Des Weiteren können auch Waren erkannt werden, durch in dem Spalt zwischen Siegelwalze und Vorschubwalze zermahlen wurden.

Ein anderer Vorteil liegt darin, dass ausgeformte Folien erkannt werden können, die mit falschen Vorschubschritten in die Vorschubwalze gelangen.

Somit können bei Erfassung dieser Fehlfunktionen bzw. dieser Störungen einfach Alarm gegeben und Maßnahmen zur Beseitigung der fehlerhaften Blisterpackungen getroffen werden, indem zum Beispiel die Messvorrichtungen entsprechende Alarmsignale oder Steuersignale einer Steuerung der Blistermaschine zuführen.

Nach einem ersten Gesichtspunkt der vorliegenden Erfindung ist bei der Siegelvorrichtung die Messvorrichtung einer Walzenaufnahme, wie z. B. einem beweglichen Arm zugeordnet, wobei die Walzenaufnahme an einer Lagerstelle derart gelagert ist, dass die Siegelwalze über die Walzenaufnahme mit einer Kreisbewegung an die Vorschubwalze schwenkbar ist. Dies hat den Vorteil, dass zum Einen die Siegelwalze genau steuerbar an die Vorschubwalze anbringbar ist und zum Anderen aufgrund der Positionierung der Messvorrichtung an der Walzenaufnahme mögliche Beeinflussungen des Siegelvorganges vermieden werden können.

Bevorzugt enthält die Messvorrichtung einen Laser zur optischen Bestimmung der Auslenkung der Walzenaufnahme. Somit wird berührungslos ohne Beeinflussung der Siegelwalze die Siegelung der Formfolie mit der Deckfolie auf Fehler überwacht.

Alternativ und / oder zusätzlich weist die Messvorrichtung einen Messtaster, insbesondere einen mechanischen Messtaster, zur Bestimmung der Auslenkung der Walzenaufnahme auf. Dadurch wird auf äußerst zuverlässige und kostengünstige Weise eine Auslenkung der Walzenaufnahme aufgrund einer Auslenkung der Siegelwalze erfasst und somit die Siegelung der Formfolie mit der Deckfolie auf Fehler überwacht.

Als vorteilhaft hat es sich erwiesen, wenn die Messvorrichtung mindestens einen, insbesondere zwei Dehnungsmessstreifen, zur Bestimmung einer Positionsänderung der Walzenaufnahme aufweist, die insbesondere mittig an der Walzenaufnahme angeordnet sind. Dadurch wird auf einfache Weise eine Auslenkung der Walzenaufnahme erfasst.

Weiterhin kann die Messvorrichtung einen Winkelcodierer aufweisen, der an der Lagerstelle der Walzenaufnahme zur Winkelmessung der Auslenkung der Walzenaufnahme angeordnet ist. Auf diese Weise ist die Messvorrichtung besonders gut in der Siegelvorrichtung integriert und eine Bestimmung der Auslenkung ist mit hoher Genauigkeit möglich.

Bei einer Ausgestaltung der Siegelvorrichtung ist die Lagerstelle in der Mitte der Walzenaufnahme angeordnet. Dies führt zu dem Vorteil, dass die erforderliche Siegelkraft einfacher angelegt werden kann.

Bei dieser Ausgestaltung der Siegelvorrichtung hat es sich als vorteilhaft erwiesen, wenn die Messvorrichtung einen Kraftmesser zur Bestimmung einer Änderung der Siegelkraft umfasst, der an einem Bereich der Krafteinwirkung auf die Walzenaufnahme angeordnet ist, der insbesondere an dem der Siegelwalze gegenüber liegenden Ende der Walzenaufnahme angeordnet ist, wodurch eine höhere Messempfindlichkeit gegenüber den Positionsänderungen der Siegelwalze erreicht wird.

Bei einer anderen Siegelvorrichtung hat es sich als vorteilhaft erwiesen, wenn die Lagerstelle an dem der Siegelwalze gegenüber liegenden Ende der Walzenaufnahme angeordnet ist, da dies zu dem Vorteil führt, dass ein kompakterer Aufbau möglich ist.

Nach einem zweiten Gesichtspunkt der vorliegenden Erfindung ist bei der Siegelvorrichtung eine Führung und eine die Siegelwalze aufnehmende Siegelwalzenkonsole derart angeordnet sind, dass die Siegelwalzenkonsole entlang der Führung bewegbar ist, wobei die Messvorrichtung der Siegelwalzenkonsole zugeordnet ist. Durch die lineare Führung der Siegelwalzenkonsole wird sowohl eine einfachere Steuerung des erforderlichen Siegeldruckes als auch eine einfachere Bestimmung der Auslenkung der Siegelwalze ermöglicht.

Weiterhin kann bei dieser Siegelvorrichtung die Messvorrichtung einen Laser zur optischen Bestimmung der Positionsänderung der Siegelwalzenkonsole aufweisen. Alternativ und / oder zusätzlich kann die Messvorrichtung einen mechanischen Messtaster zur mechanischen Bestimmung der Positionsänderung der Siegelwalzenkonsole aufweisen. Des weitern kann die Messvorrichtung einen Kraftmesser umfassen, der an einem Bereich der Krafteinwirkung auf die Siegelwalzenkonsole angeordnet ist. Diese Ausgestaltungen führen jeweils zu den schon unter dem ersten Gesichtspunkt der Erfindung genannten Vorteilen, wobei zusätzlich aufgrund der linearen Führung der Siegelwalzenkonsole die Auslenkung der Siegelwalze einfacher zu bestimmen ist.

Nach einem dritten Gesichtspunkt der vorliegenden Erfindung weist die Siegelvorrichtung ein Lager für die Siegelwalze auf, wobei an dem Lager ein Dehnungsmessstreifen zur Bestimmung einer Positionsänderung der Siegelwalze und / oder ein Kraftmesser zur Bestimmung einer Änderung der Siegelkraft angeordnet ist. Dies hat den Vorteil, dass die Auslenkung der Siegelwalze unmittelbar und somit mit höherer Genauigkeit bestimmt werden kann.

Nach einem vierten Gesichtspunkt der vorliegenden Erfindung ist bei der Siegelvorrichtung die Siegelwalze in einem Schwenklager parallel zur Bewegungsrichtung der Formfolie, insbesondere mittig gelagert. Auf diese Weise liegt die Siegelwalze genauer an der Vorschubwalze an, so dass eine durchgehende Linienberührung zwischen Siegelwalze und Vorschubwalze für eine bessere Siegelqualität gewährleistet werden kann.

Im Folgenden wird die Erfindung an in den Zeichnungen dargestellten Ausführungsbeispielen näher erläutert; es zeigen:
- Fig. 1: eine schematische Darstellung einer Siegelvorrichtung in perspektivischen Ansicht,
- Fig. 2: eine schematische Darstellung einer Auslenkung der Siegelwalze bei der Siegelvorrichtung aus Fig. 1 aufgrund einer fehlplatzierten Tablette auf der Formfolie,
- Fig. 3: eine schematische Darstellung einer anderen Auslenkung der Siegelwalze bei der Siegelvorrichtung aus Fig. 1 aufgrund einer fehlplatzierten Tablette auf der Formfolie,
- Fig. 4: eine schematische Darstellung in Seitenansicht eines ersten Ausführungsbeispiels der Siegelvorrichtung nach der vorliegenden Erfindung,
- Fig. 5: eine schematische Darstellung in Querschnittsansicht eines zweiten Ausführungsbeispiels der Siegelvorrichtung nach der vorliegenden Erfindung,
- Fig. 6: eine schematische Darstellung in Seitenansicht eines dritten Ausführungsbeispiels der Siegelvorrichtung nach der vorliegenden Erfindung,
- Fig. 7: eine schematische Darstellung in Querschnittsansicht eines vierten Ausführungsbeispiels der Siegelvorrichtung nach der vorliegenden Erfindung und
- Fig. 8: eine schematische Darstellung in Querschnittsansicht eines fünften Ausführungsbeispiels der Siegelvorrichtung nach der vorliegenden Erfindung.

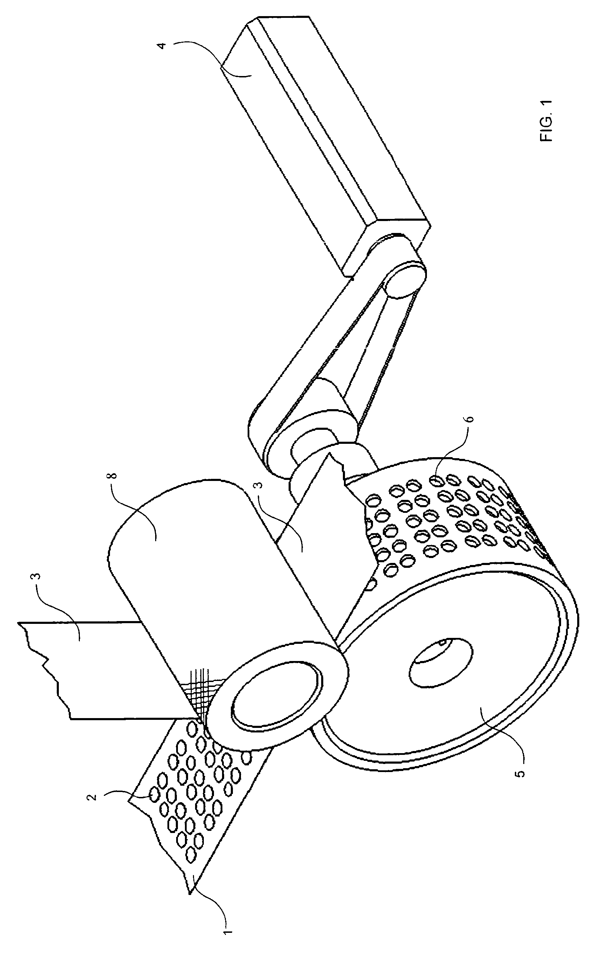

Die Fig. 1 zeigt eine Siegelvorrichtung zum Siegeln einer, vorzugsweise befüllte Näpfe 2 aufweisenden Formfolie 1 mit einer Deckfolie 3 in einer schematischen perspektivischen Darstellung. Die Siegelvorrichtung weist eine Vorschubwalze 5, die auf ihrer Umfangsfläche Vertiefungen 6 für die Näpfe 2 der Formfolie 3 enthält, eine Siegelwalze 8 und einen Walzenantrieb 4 auf, der die Vorschubwalze 5 antreibt. Zwischen der Vorschubwalze 5 und der Siegelwalze 8 werden die Formfolie 1 und die Deckfolie 3 durchgeführt, um die Waren in den Näpfen 2 über den Siegeldruck und die Temperatur mit der Formfolie 1 und der Deckfolie 3 zu siegeln.

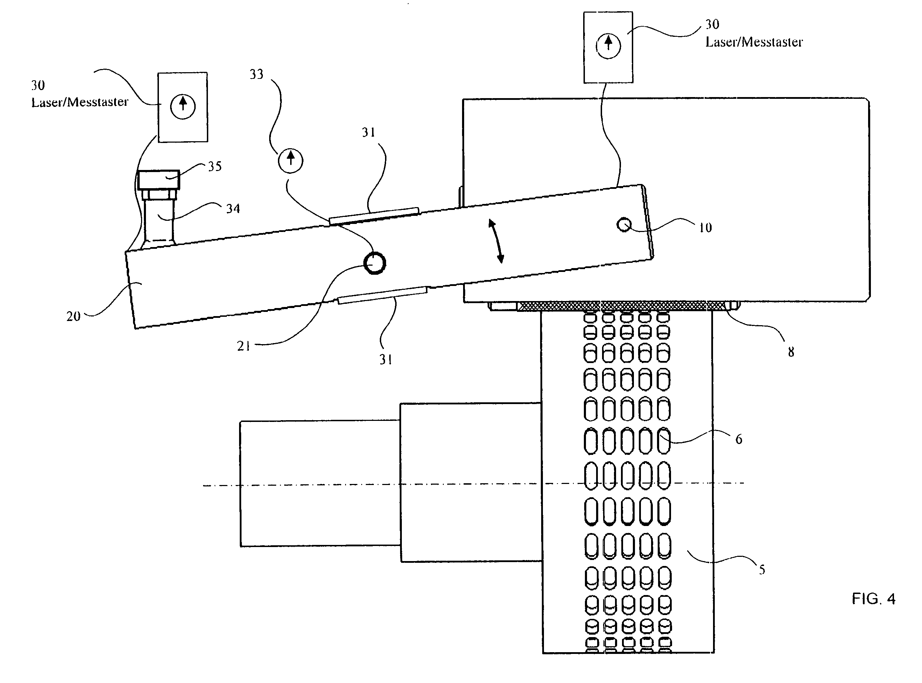

Wie nachfolgend zu den Figuren 4 bis 6 beschrieben wird, kann zum Beispiel die Siegelwalze über eine Walzenaufnahme 20, die mittig an einer Lagerstelle 21 gelagert ist, oder über einen anschwenkbaren Arm 22, der an der Drehachse 23 gelagert ist, mit einer Kreisbewegung an die Vorschubwalze 5 geführt werden. Weiterhin ist es möglich, die Siegelwalze 8 über eine Siegelwalzenkonsole 25, die eine geradlinige Bewegung durchführt, an die Vorschubwalze 5 zu bringen.

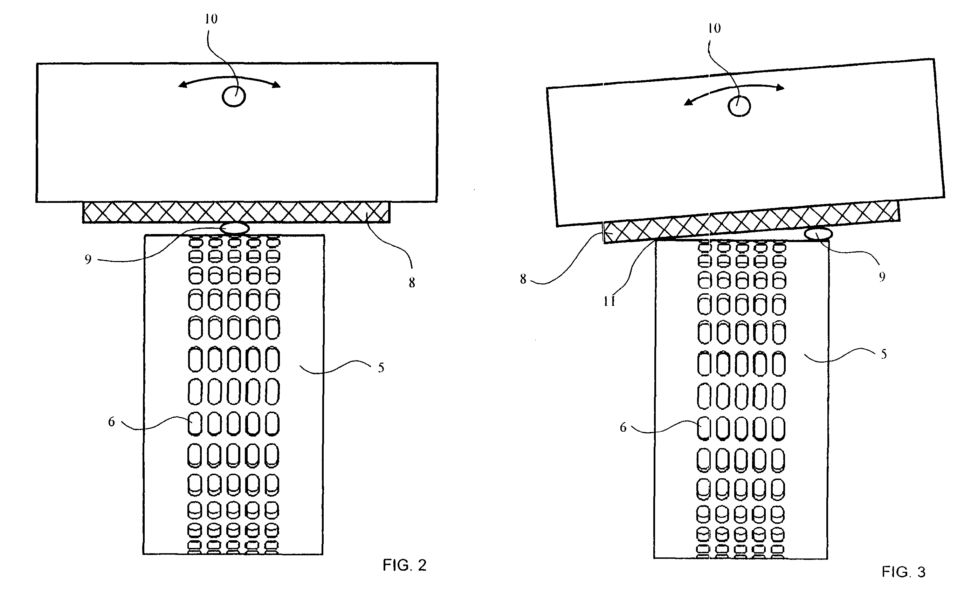

Aufgrund verschiedener Einflüsse kann es dazu kommen, dass die zu siegelnden Waren nicht wie vorgesehen sich in den Näpfen, sondern auf der späteren Siegelfläche auf der Formfolie 1 befinden. Bei der weiteren Bearbeitung kann dies zu den in den Figuren 2 und 3 dargestellten Problemen führen.

Die Fig. 2 zeigt eine schematische Darstellung einer Auslenkung der Siegelwalze 8 aufgrund einer auf der Formfolie 1 mittig fehlplatzierten Tablette 9. Die Tablette 9 befindet sich im Spalt zwischen der Vorschubwalze 5 und der Siegelwalze 8. Die Siegelwalze 8 ist an dem Schwenklager 10 gelagert. Da die fehlplatzierte Tablette 9 sich genau unter dem Schwenklager 10 befindet, wird die Siegelwalze 8 bis zur maximalen Höhe der Tablette 9 angehoben, so dass eine Siegelung der anderen Tabletten 9 in den Näpfen 2 verhindert wird. Diese Störungen in der Bearbeitungskette sollen erfasst werden, um die fehlerhaften Blister in einem weiteren Schritt einfach und schnell aussortieren zu können.

Die Fig. 3 zeigt eine schematische Darstellung einer Auslenkung der Siegelwalze 8 aufgrund einer auf der Formfolie 1 an deren Rand fehlplatzierten Tablette 9, wobei für die Erklärung der mit der Fig. 2 übereinstimmenden Teile auf den Beschreibungsteil der Fig. 2 verwiesen wird. Da die fehlplatzierte Tablette 9 sich nicht unter dem Schwenklager 10, sondern am Rand der Formfolie 1 befindet, wird die Siegelwalze 8 so verkippt, dass die Siegelwalze 8 nur noch auf der Tablette 9 und der gegenüber liegenden Vorschubwalzenkante 11 aufliegt. Infolgedessen ist die Siegelwalze 8 am Schwenklager 10 bis zur maximalen halben Höhe der Tablette 9 angehoben, wodurch eine Siegelung der anderen Tabletten in den Näpfen 2 verhindert wird.

Diese Positionsänderungen der Siegelwalze 8 nach der Fig. 2 oder der Fig. 3 sollen zur Entfernung der fehlerhaften Blister erkannt werden. Um diese Positionsänderungen zu erfassen, werden nach der vorliegenden Erfindung Messvorrichtungen 30, 31, 33 und 35 zum Bestimmen der Positionsänderungen vorgeschlagen. Dabei ist zu berücksichtigen, dass nur die Positionsänderungen der Siegelwalze 8 erfasst werden sollen, welche durch fortlaufende Störungen an der Vorschubwalze 5 oder der Siegelwalze 8 zum Beispiel durch Unwucht entstehen. Es gibt kleinere Auslenkungen und Schwingungen der Siegelwalze 8 in einem bestimmten Bereich, die durch das Siegeln selber, durch Erschütterungen von anderen Stationen oder von außen über das Maschinengestell entstehen. Um einen Fehlalarm zu verhindern, dürfen diese Auslenkungen nicht beachtet werden, so dass der bestimmte Bereich ausgewertet werden muss, um ausschließlich die entscheidenden Fehler erfassen zu können.

Die Fig. 4 zeigt eine schematische Darstellung in Seitenansicht eines ersten Ausführungsbeispiels der Siegelvorrichtung nach der vorliegenden Erfindung. Die Siegelwalze 8 ist über eine Walzenaufnahme 20 an die Vorschubwalze 5 schwenkbar, wobei die Siegelwalze 8 an dem Schwenklager 10 gelagert ist. Die Walzenaufnahme ist mittig an der Lagerstelle 21 gelagert. In der Fig. 4 sind verschiedene Möglichkeiten für die Messstellen und die Messvorrichtungen bei dem ersten Ausführungsbeispiel dargestellt, die einzeln oder in einer beliebigen Kombination verwendet werden können.

An der Lagerstelle 21 der Walzenaufnahme 20 kann zum Beispiel eine Winkelmesseinheit 33, insbesondere eine Winkelcodiereinheit angebracht sein, um über eine Winkeländerung der Walzenaufnahme 20, die mit der Siegelwalze 8 über das Schwenklager 10 verbunden ist, eine Positionsänderung der Siegelwalze 8 zu erfassen.

Weiterhin kann ein Laser 30 und / oder ein Wegmesssystem 30, insbesondere ein mechanisches oder ein elektrisches Wegmesssystem, vorzugsweise an einem der beiden Enden des Walzenaufnahme 20 oder an beiden Enden der Walzenaufnahme 20 angebracht sein, um über eine Positionsänderung der Enden der Walzenaufnahme 20 eine Positionsänderung der Siegelwalze 8 zu erfassen.

Außerdem kann, wie in der Fig. 4 gezeigt, ein Kraftmesser 35 und / oder ein Beschleunigungsmesser 35 an einem Bereich 34 der Krafteinwirkung auf die Walzenaufnahme 20 angeordnet sein, um über eine Änderung der Krafteinwirkung, die für den Aufbau und die Aufrechterhaltung des Siegeldrucks verwendet wird, eine Positionsänderung der Siegelwalze 8 zu erfassen, wobei insbesondere durch impulsartige Stöße ein Abheben der Siegelwalze 8 von der Vorschubwalze 5 erkannt werden kann.

Des Weiteren können Dehnungsmessstreifen 31 an der Lagerstelle 21 der Walzenaufnahme 21, wie in der Fig. 4 gezeigt, angebracht sein, um durch die Dehnungen eine Positionsänderung der Siegelwalze 8 zu erfassen.

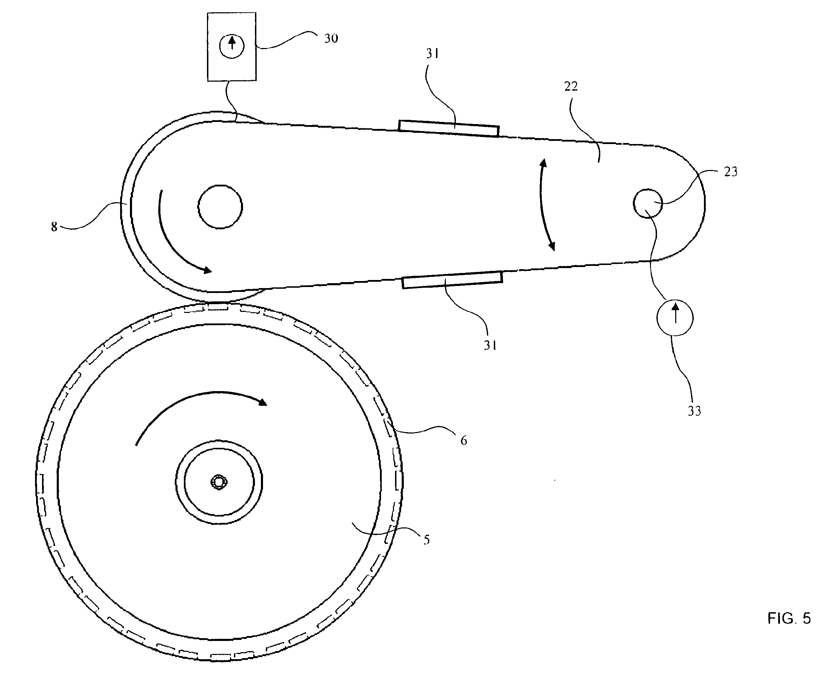

Die Fig. 5 zeigt eine schematische Darstellung eines zweiten Ausführungsbeispiels der Siegelvorrichtung nach der vorliegenden Erfindung in Querschnittsansicht. Die Siegelwalze 8 ist über eine Walzenaufnahme 22, einen schwenkbaren Arm, an die Vorschubwalze 5 schwenkbar. Die Walzenaufnahme 22 ist, wie in der Fig. 5 gezeigt, an der Drehachse 23 gelagert, die sich an dem der Vorschubwalze abgewandten Ende der Walzenaufnahme befindet. In der Fig. 5 sind verschiedene Möglichkeiten für die Messstellen und die Messvorrichtungen bei dem zweiten Ausführungsbeispiel dargestellt, die einzeln oder in einer beliebigen Kombination verwendet werden können.

Zum Beispiel kann an der Drechachse 23 der Walzenaufnahme 22 eine Winkelmesseinheit 33, insbesondere eine Winkelcodiereinheit angebracht sein, um über eine Winkeländerung der Walzenaufnahme 22, die mit der Siegelwalze 8 verbunden ist, eine Positionsänderung der Siegelwalze 8 zu erfassen.

Weiterhin kann, wie in der Fig. 5 gezeigt, ein Laser 30 und / oder ein Messtaster 30 vorzugsweise an dem der Vorschubwalze 5 zugewandten Ende der Walzenaufnahme 22 angebracht sein, um über eine Positionsänderung des Endes der Walzenaufnahme 22 eine Positionsänderung der Siegelwalze 8 zu erfassen.

Des Weiteren können Dehnungsmessstreifen 31 an der Walzenaufnahme 22, vorzugsweise in der Mitte, wie in der Fig. 5 gezeigt, angebracht sein, um durch Dehnungen eine Positionsänderung der Siegelwalze 8 zu erfassen.

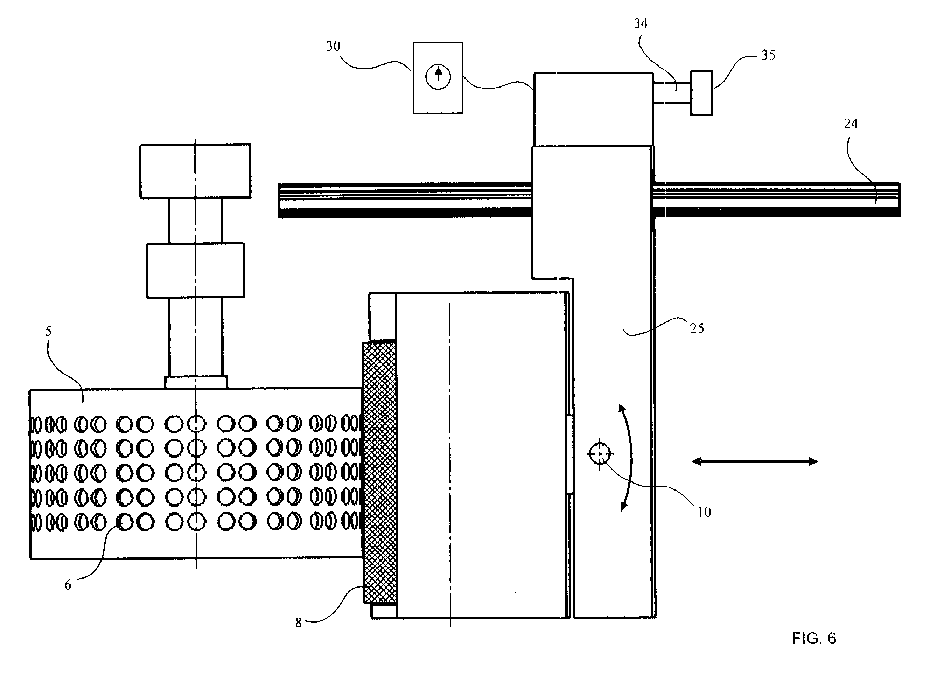

Die Fig. 6 zeigt eine schematische Darstellung in Seitenansicht eines dritten Ausführungsbeispiels der Siegelvorrichtung nach der vorliegenden Erfindung. Die Siegelwalze 8 kann über eine Siegelwalzenkonsole 25 an die Vorschubwalze 5 herangeführt, wobei die Siegelwalzenkonsole 25 linear entlang der Führung 24 in Richtung der Vorschubwalze 5 bewegbar und die Siegelwalze 8 an dem Schwenklager 10 gelagert ist. In der Fig. 6 sind verschiedene Möglichkeiten für die Messstellen und die Messvorrichtungen bei dem dritten Ausführungsbeispiel dargestellt, die einzeln oder in einer beliebigen Kombination verwendet werden können.

Zum Beispiel kann ein Laser 30 und / oder ein Wegmesssystem 30, insbesondere ein mechanisches oder ein elektrisches Wegmesssystem, an der Siegelwalzenkonsole 25 angebracht sein, um über eine Positionsänderung der Siegelwalzenkonsole 25 eine Positionsänderung der Siegelwalze 8 zu erfassen, die über das Schwenklager 10 mit der Siegelwalzenkonsole 25 verbunden ist.

Außerdem kann, wie in der Fig. 6 gezeigt, ein Kraftmesser 35 an einem Bereich 34 der Krafteinwirkung auf die Siegelwalzenkonsole 25 angeordnet sein, um über eine Änderung der Krafteinwirkung, die für den Aufbau und die Aufrechterhaltung des Siegeldrucks verwendet wird, eine Positionsänderung der Siegelwalze 8 zu erfassen, wobei insbesondere durch impulsartige Stöße ein Abheben der Siegelwalze 8 von der Vorschubwalze 5 erkannt werden kann.

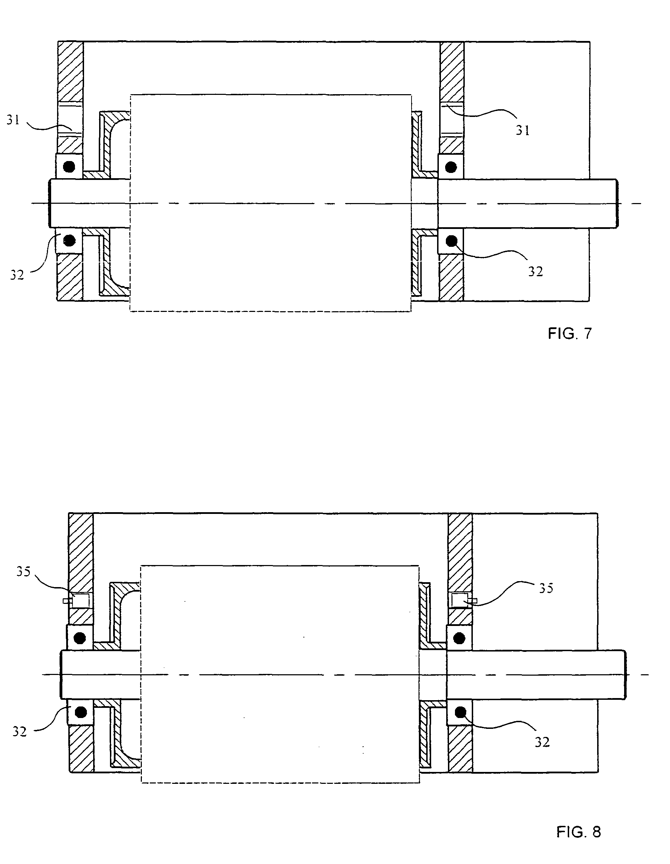

Die Figuren 7 und 8 zeigen in Querschnittsdarstellung ein viertes Ausführungsbeispiel der Siegelvorrichtung nach der vorliegenden Erfindung. In beiden Figuren ist die Lagerung der Siegelwalze 8 in dem Schwenklager 10 detaillierter dargestellt. In zwei Lagerelementen 32, die beidseitig angeordnet sind, wird die Siegelwalze 8 gelagert.

Weiterhin kann die Messvorrichtung ein Manometer 35 zur Bestimmung einer Änderung der Siegelkraft aufweisen, der in einem Bereich der Krafterzeugung, wie zum Beispiel einem Pneumatikzylinder, angeordnet ist.

Bei der ersten Ausgestaltung des vierten Ausführungsbeispiels der Siegelvorrichtung nach der Fig. 7 sind beidseitig zwei Dehnungsmessstreifen 31 jeweils an den zwei Lagerelementen 32 angeordnet, um über eine Dehnung der Dehnungsmessstreifen 31 eine Positionsänderung der Siegelwalze 8 zu erfassen.

Bei der zweiten Ausgestaltung des vierten Ausführungsbeispiels der Siegelvorrichtung nach der Fig. 8 sind beidseitig zwei Kraftmesser 35 jeweils an den zwei Lagerelementen 32 angeordnet, um über eine Änderung der Kraft, die auf die Lagerelemente 32 wirkt, eine Positionsänderung der Siegelwalze 8 zu erfassen.

Die erste und die zweite Ausgestaltung des vierten Ausführungsbeispiels der Siegelvorrichtung kann miteinander kombiniert werden. Auch kann das erste, das zweite oder das dritte Ausführungsbeispiel mit dem vierten Ausführungsbeispiel kombiniert werden.

## Patentansprüche

1. Siegelvorrichtung zum Siegeln einer, vorzugsweise befüllte Näpfe (2) aufweisenden Formfolie (1) mit einer Deckfolie (3), mit einer mittels eines Walzenantriebes (4) antreibbaren, in ihrer Umfangsfläche Vertiefungen (6) für die Näpfe (2) aufweisenden Vorschubwalze (5) und einer darauf ablaufenden Siegelwalze (8), zwischen denen die Formfolie (1) und die Deckfolie (3) durchführbar sind, **gekennzeichnet durch** mindestens eine Messvorrichtung (30, 31, 33, 35) zum Bestimmen einer Positionsänderung der Siegelwalze (8) beim Siegeln.

2. Siegelvorrichtung nach Anspruch 1, **dadurch gekennzeichnet, dass** die Messvorrichtung (30, 31, 33, 35) einer Walzenaufnahme (20, 22) zugeordnet ist, wobei die Walzenaufnahme (20, 22) an einer Lagerstelle (21, 23) derart gelagert ist, dass die Siegelwalze (8) über die Walzenaufnahme (20, 22) mit einer Kreisbewegung an die Vorschubwalze (5) anschwenkbar ist.

3. Siegelvorrichtung nach Anspruch 2, **dadurch gekennzeichnet, dass** die Messvorrichtung einen Laser (30) zur optischen Bestimmung der Auslenkung der Walzenaufnahme (20, 22) und / oder ein mechanisches Wegmesssystem (30) und / oder ein elektrisches Wegmesssystem (30) und / oder einen Messtaster (30) zur Bestimmung der Auslenkung der Walzenaufnahme (20, 22) aufweist.

4. Siegelvorrichtung nach Anspruch 2 oder 3, **dadurch gekennzeichnet, dass** die Messvorrichtung mindestens einen, insbesondere zwei Dehnungsmessstreifen (31) zur Bestimmung einer Positionsänderung der Walzenaufnahme (20, 22) aufweist, die vorzugsweise mittig an der Walzenaufnahme (20, 22) angeordnet sind.

5. Siegelvorrichtung nach einem der Ansprüche 2 bis 4, **dadurch gekennzeichnet, dass** die Messvorrichtung eine Winkelmesseinheit (33), insbesondere eine Winkelcodierereinheit aufweist, die an der Lagerstelle (21, 23) der Walzenaufnahme (20, 22) zur Winkelmessung der Auslenkung der Walzenaufnahme (20, 22) angeordnet ist.

6. Siegelvorrichtung nach einem der Ansprüche 2 bis 5, **dadurch gekennzeichnet, dass** die Lagerstelle (21) in der Mitte der Walzenaufnahme (20) angeordnet ist.

7. Siegelvorrichtung nach Anspruch 6, **dadurch gekennzeichnet, dass** die Messvorrichtung einen Kraftmesser (35) zur Bestimmung einer Änderung der Siegelkraft umfasst, der an einem Bereich (34) der Krafteinwirkung auf der Walzenaufnahme (20) angeordnet ist, der insbesondere an dem der Siegelwalze (8) gegenüber liegenden Ende der Walzenaufnahme (20) angeordnet ist.

8. Siegelvorrichtung nach einem der Ansprüche 2 bis 5, **dadurch gekennzeichnet, dass** die Lagerstelle (23) an dem der Siegelwalze (8) gegenüber liegendem Ende der Walzenaufnahme (22) angeordnet ist.

9. Siegelvorrichtung nach Anspruch 1, **dadurch gekennzeichnet, dass** bei der Siegelvorrichtung eine Führung (24) und eine die Siegelwalze (8) aufnehmende Siegelwalzenkonsole (25) derart angeordnet sind, dass die Siegelwalzenkonsole (25) entlang der Führung (24) bewegbar ist, wobei die Messvorrichtung (30, 35) der Siegelwalzenkonsole (25) zugeordnet ist.

10. Siegelvorrichtung nach Anspruch 9, **dadurch gekennzeichnet, dass** die Messvorrichtung einen Laser (30) zur optischen Bestimmung der Positionsänderung der Siegelwalzenkonsole (25) und / oder ein mechanisches Wegmesssystem (30) und / oder ein elektrisches Wegmesssystem (30) und / oder einen Messtaster (30) zur Bestimmung der Positionsänderung der Siegelwalzenkonsole (25) aufweist.

11. Siegelvorrichtung nach Anspruch 9 oder 10, **dadurch gekennzeichnet, dass** die Messvorrichtung einen Kraftmesser (35) umfasst, der an einem Bereich (34) der Krafteinwirkung auf die Siegelwalzenkonsole (25) angeordnet ist.

12. Siegelvorrichtung nach einem der Ansprüche 1 bis 11, **dadurch gekennzeichnet, dass** die Siegelwalze (8) in einem Schwenklager (10) parallel zur Bewegungsrichtung der Formfolie (1), insbesondere mittig gelagert ist und dass das Schwenklager (10) mindestens ein Lagerelement (32), insbesondere zwei Lagerelemente (32) beidseitig, für die Siegelwalze (8) aufweist, wobei an dem Lager (32) mindestens ein Dehnungsmessstreifen (31), insbesondere zwei Dehnungsmessstreifen (31) beidseitig, zur Bestimmung einer Positionsänderung der Siegelwalze (8) und / oder mindestens ein Kraftmesser (35), insbesondere zwei Kraftmesser (35) beidseitig, zur Bestimmung einer Änderung der Siegelkraft angeordnet sind.

13. Siegelvorrichtung nach Anspruch 12, **dadurch gekennzeichnet, dass** die Messvorrichtung eine Winkelmesseinheit, insbesondere eine Winkelcodierereinheit aufweist, die an das Schwenklager (10) zur Winkelmessung der Auslenkung der Siegelwalze (8) angeordnet ist.

14. Siegelvorrichtung nach einem der Ansprüche 1 bis 13, **dadurch gekennzeichnet, dass** die Messvorrichtung ein Manometer (35) zur Bestimmung einer Änderung der Siegelkraft aufweist, der in einem Bereich der Krafterzeugung angeordnet ist.
